# EUROPEAN PATENT SPECIFICATION

(11) **EP 3 556 605 B1**
(45) Date of publication and mention of the grant of the patent: **09.12.2020**
(21) Application number: 18167959.8
(22) Date of filing: 18.04.2018
(51) Int. Cl.: B60N 2/34

(54) **VEHICLE WITH SEATS TRANSFORMABLE INTO A BED**
FAHRZEUG MIT IN EIN BETT VERWANDELBAREN SITZEN
VÉHICULE COMPORTANT DES SIÈGES TRANSFORMABLES EN LITS

(43) Date of publication of application: 23.10.2019
(73) Proprietor: Ford Global Technologies, LLC, Dearborn, MI 48126 (US)
(72) Inventor: AYDIN, Mustafa, Izmit/Kocaeli (TR); ILERI, Süleyman, Kartal/ISTANBUL (TR); UZUN, Hüseyin, Sisli/ISTANBUL (TR); SEZGINER, Emine Zuhre, Altintepe/Maltepe/Istanbul (TR)
(74) Representative: Illing, Rolf

(56) References cited:
- US-A- 5 328 233
- US-A1- 2008 010 743

## Description

The present invention relates in general to seating arrangements for vehicles. More in particular, the present invention relates to a seating arrangement for a vehicle with spaced apart seats that can be transformed into a bed. The present invention also relates to a vehicle comprising such a seating arrangement, and to vehicle seats usable in such a seating arrangement, and to a kit of parts comprising a left and a right vehicle seat.

Large trucks typically have a dedicated sleeping compartment allowing the driver to sleep inside the vehicle, for example during the night.

Smaller vehicles, such as for example small commercial vehicles or small trucks or cars typically do not have a dedicated sleeping compartment, as this would occupy too much space. It is however desirable that also these vehicles have some kind of sleeping arrangement, allowing the driver to take a nap, preferably in a lying position.

Several systems for providing a sleeping arrangement in vehicles are known in the art.

US 7,934,762 B2 discloses a vehicle with a sleeping arrangement formed by a cushion portion of a first seat and a back portion of a second seat, after rotation of the second seat over 90 °.

US 7,380,295 B2 discloses a bed for use with two adjacent seats separated from each other by a gap. The bed comprises a first end disposed on one of the passenger seats and a second end disposed on the other seat to bridge the gap.

US 7,845,718 B1 describes a bed formed by two face-to-face aircraft passenger seats, using an inflatable block.

US 2010/0140996 A1 describes an auxiliary seat for a motor vehicle, which has a material web, which can be unrolled and rolled like a roller blind between two vehicle seats which are spaced apart, and which is fastenable to said vehicle seats.

US 6,711,762 B2 describes a body to be put on top of two adjacent seats, which are separated from each other by a gap, to form a bed.

WO 2017/116362 A1 describes a resting unit extension system, which is used for resting purposes in vehicles, and is extended by means of the extending member thereof to provide a more comfortable resting space.

JP 2015-000715 A describes a rotatable front driver seat with cut corners, allowing to form a bed.

US 7,025,420 B2 describes a vehicle seat, which can be transformed into a bed, by folding the backrest.

WO 2002/12015 A1 describes a combination of a chair and bed, which chair comprises a seat and a backrest which are pivotably connected to each other, and a frame on which the chair rests.

EP 2 767 436 A2 describes a bed arrangement in a camper vehicle, using an inflatable mattress to overlie and span two front seats and two rear seats. US 2008/010743 A1 discloses two adjacent seats and an additional bed part in between.

There is always room for improvements or alternatives.

The present invention has the object to provide a seating arrangement for a vehicle, which is transformable into a bed.

It is a particular object of embodiments of the present invention to provide a seating arrangement comprising two adjacent seats spaced apart by a gap, which is transformable into a bed without having to rotate any of the seats, and without having to adjust the backrest of the seats, and without using the backrest of other seats, and without having to move the seats towards or away from each other, and preferably without having to inflate or deflate a body.

It is also an object of the present invention to provide a vehicle comprising such a seating arrangement.

It is also an object of the present invention to provide a vehicle seat for use in such a seating arrangement.

It is also an object of the present invention to provide a kit of parts comprising a left vehicle seat and a right vehicle seat for forming such a seating arrangement.

These objects are achieved by a seat arrangement having the features of claim 1, and by a vehicle having the features of claim 10, and by a vehicle seat having the features of claim 13, and by a kit of parts having the features of claim 15. Further, particularly advantageous embodiments of the invention are disclosed in the dependent claims.

It should be noted that the individual features listed in the description below can be combined in any technically meaningful way with each other and show further embodiments of the invention. The description of the invention is additionally characterized and specified particularly in connection with the figures.

In an advantageous embodiment, the present invention discloses a seating arrangement for a vehicle comprising: two adjacent seats, spaced apart by a gap; a bridging mechanism which can be positioned between said seats for forming a bed; wherein each of said seats comprises a hollow pedestal; and the bridging mechanism comprises two bridging parts, each bridging part being movably mounted to one of said adjacent seats, and being selectively movable between a normal, retracted position inside said hollow pedestal, and an extended, sleeping position, between said adjacent seats.

It is an advantage that the two seats can easily and elegantly be transformed into a bed, without having to rotate the seats, and without having to adjust the backrest of the seats, and without using the backrest of other seats, and without having to move the seats towards or away from each other.

It is a further advantage that the bridging parts do not need to be stored separately, but are mounted to the seats, and can be accommodated therein. This provides a compact solution, and the risk of forgetting or loosing the bridging parts is eliminated.

It is a further advantage that a bed can be formed using the existing seats, without requiring a separate sleeping compartment.

It is a further advantage that the seats remain in their original position, and can be used for driving even when one or both bridging parts are in their extended position.

According to a further advantageous embodiment of the present invention, the bridging parts have structural strength, and are non-inflatable.

It is an advantage that the bridging parts have structural strength so that they can support a person lying thereon.

It is a further advantage that the bridging parts are non-inflatable, because such bed can easily and rapidly be formed without first having to inflate an object, which is time consuming, and such a bed can easily and rapidly be stored without first having to deflate an object.

According to a further advantageous embodiment of the present invention, the bridging parts comprise a cushion portion.

It is an advantage that the bridging parts have a soft, compressible portion. In this way the need for a separate cushion can be avoided.

According to a further advantageous embodiment of the present invention, the seating arrangement further comprises a first strap connected to one of said two bridging parts, and a second strap connected to the other of said bridging parts.

It is an advantage of the strap that it allows to easily pull the bridging part out of the hollow pedestal from underneath the seat.

According to a further advantageous embodiment of the present invention, each of the bridging parts is mounted to a respective seat by means of a bracket mechanism optionally comprising a rail.

It is an advantage of the bracket mechanism that it provides a robust mounting and facilitates easy storage of the bridging parts inside the hollow pedestal and facilitates easy removal of the bridging parts from said pedestal.

According to a further advantageous embodiment of the present invention, the bracket mechanism further comprises at least one spring.

It is an advantage that the at least one spring can bias the bracket mechanism for example to its outwards position, or towards its inwards position, or both.

According to a further advantageous embodiment of the present invention, each of the bridging parts further comprises a support bracket hingedly connected to said bridging part, for supporting an outer end of said bridging part when in the extended position.

It is an advantage that the support bracket supports an outer end of the bridging part, allowing the bridging part to rest thereon. This provides strength and rigidity to the bed, and increases its bearing capacity, while decreasing the risk of bending.

According to a further advantageous embodiment of the present invention, the bracket mechanism further comprises a locking mechanism or a latching mechanism.

The locking mechanism or latching mechanism can help to keep the bridging parts in their extended position. It is an advantage that the locking or latching mechanism increases stability and robustness of the construction when in the extended position.

According to a further advantageous embodiment of the present invention, the seats are spaced apart by a distance in the range from about 50 cm to about 100 cm between them; and the bridging parts each have a width in the range from about 25 cm to about 50 cm.

According to another advantageous embodiment of the present invention, the present invention discloses a vehicle comprising at least one seating arrangement as described above, for example at the front or at the rear, or comprising at least two seating arrangements as described above, for example at the front and at the rear.

According to a further advantageous embodiment of the present invention, the seats are fixedly or slideably mounted to the vehicle.

It is an advantage that the seats need not be rotatable, because this allows the seats to be more stable.

According to a further advantageous embodiment of the present invention, the vehicle further comprises at least one support bracket movable or erectable towards outer ends of the bridging parts when in their extended position.

This is an alternative manner for providing a support substantially in the middle of the bed. It is an advantage of this embodiment that no hingeable support brackets are needed at a lower surface of the bridging parts, but one or two support brackets extending from a lower surface of the vehicle can also be used to support the one or two bridging parts. Preferably, there is a manually releasable locking or latching mechanism for fixing the bridging parts in their extended position to form a stable bed.

According to another advantageous embodiment of the present invention, the present invention discloses a vehicle seat comprising: a hollow pedestal; a bridging part movably mounted to said vehicle seat, and selectively movable between a normal, retracted position inside said hollow pedestal, and an extended, sleeping position situated on a left or a right side of said vehicle seat.

According to a further advantageous embodiment of the present invention, the bridging part is mounted to the vehicle seat by means of a bracket mechanism, preferably comprising at least two arms, and optionally further comprising a rail.

According to another advantageous embodiment of the present invention, the present invention discloses a kit of parts comprising a left vehicle seat wherein the bridging part is extendable on a right side of the seat as seen by a person sitting on the seat; and a right vehicle seat wherein the bridging part is extendable on a left side of the seat as seen by a person sitting on the seat.

Further features and advantages of the present invention will become apparent from the following description of a non-limiting embodiment of the invention which will be explained below with reference to the drawing, wherein:
- FIG. 1: is a front view of a seating arrangement according to the present invention, when the bridging parts (indicated by a dotted area for illustrative purposes) are in their fully retracted position inside respective pedestals of the seats.
- FIG. 2: is a front view of the seating arrangement of FIG. 1, where the bridging part of the right seat (passenger seat) is partially extending from the pedestal.
- FIG. 3: is a front view of the seating arrangement of FIG. 1, when both bridging parts (indicated by a dotted area for illustrative purposes) are in their fully extended position to form a bed.

In the various figures, equivalent elements with respect to their function are always provided with the same reference numerals so that these elements are usually described only once.

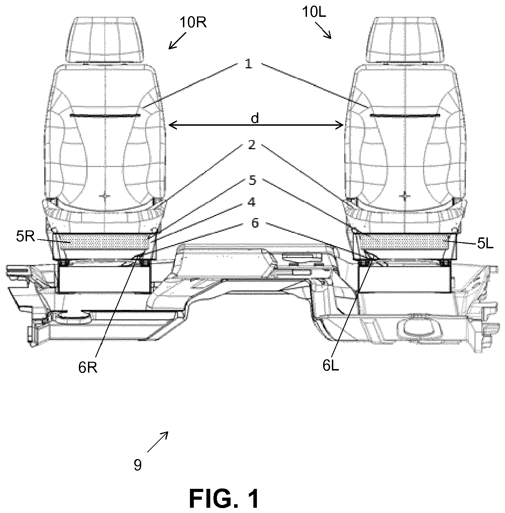

FIG. 1 shows a seating arrangement 9 for a vehicle, for example a light truck or a van.

The seating arrangement 9 comprises two adjacent seats 10 (herein also referred to as 10L and 10R), for example, two front seats or two rear seats. The seats 10 each comprise a seat cushion 2 and a backrest 1. The two seats are spaced apart by a gap between them. The seating arrangement 9 further comprises a bridging mechanism which can be selectively positioned between said seats 10 to form a bed or can be stored in a retracted position or storage position, inside hollow pedestals 4 (herein also referred to as 4L, 4R) of the seats 10.

More specifically, the bridging mechanism comprises two bridging parts 5 (herein also referred to as 5L, 5R), and each bridging part 5L, 5R is movably mounted to one of said adjacent seats 10L, 10R, and each bridging part 5L, 5R is selectively movable between a normal, retracted position inside said hollow pedestal 4L, 4R and an extended, sleeping position, between said adjacent seats 10L, 10R. Each hollow pedestal 4L, 4R is adapted for accommodating a respective bridging part 5L, 5R.

As an example, the gap between the adjacent seats 10 may have a width "d" of about 50 cm to about 100 cm, but the present invention is not limited thereto, and other gap sizes may also be used. The bridging parts 5R, 5L typically have a width of about 50 % of this gap distance, thus preferably about 25 cm to about 50 cm. The bridging parts are preferably substantially rectangular.

The present invention is partly based on the insight that the gap does not need to be spanned by a single, relatively large element which needs to be highly rigid and therefore rather bulky and difficult to store, but instead can be spanned by two relatively small and separate bridging parts (when disengaged), which can be combined or joined or otherwise engaged or arranged so as to form a relatively large bridge to span the gap. As will be explained further, the two individual bridging parts 5R, 5L are preferably also supported near their end, near the middle of the gap. The inventors moreover came to the idea of storing these smaller bridging parts in a hollow pedestal 4 of the seat 10.

As can be seen, the seats are not identical, but the left seat 10L (shown on the right of FIG. 1), for example the driver seat, has a bridging part 5L which is extendable on the right side of the seat (as seen by a person sitting on seat 10L), and the right seat 10R (shown on the left of FIG. 1), for example the passenger seat, has a bridging part 5R which is extendable on the left side of the seat (as seen by a person sitting on seat 10R). Thus, the bridging parts 5L, 5R are extendable towards each other, so as to form a bridge between the two seats 10L, 10R, the seat cushions 2 and the bridge together forming a bed.

Preferably the bridging parts 5L, 5R have structural strength, and are non-inflatable. A lower portion or a lower surface of the bridging parts 5L, 5R can for example be made of a rigid material and may comprise for example a metal frame or a plastic body.

An upper portion of the bridging parts 5L, 5R preferably contains a cushion portion to make the upper surface relatively soft.

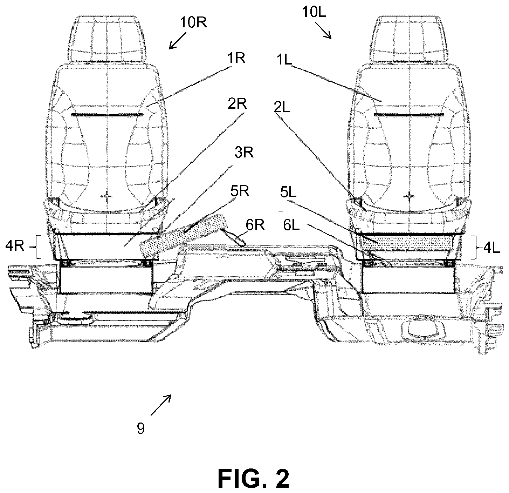

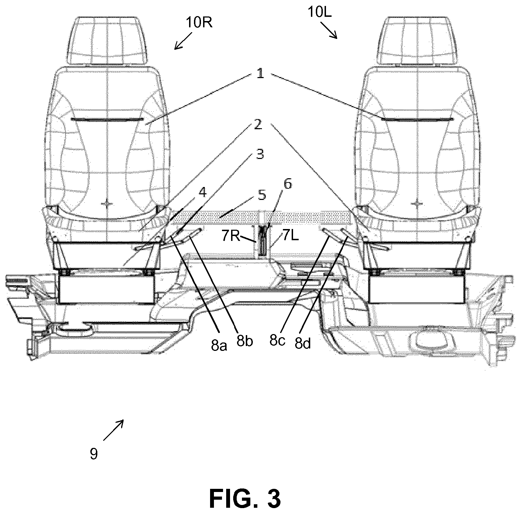

FIG. 2 shows the seating arrangement of FIG. 1, after the bridging part 5R of the right seat 10R, e.g. the passenger seat, is partially extending from the pedestal 4R, located in an intermediate position between a fully retracted position (as shown in FIG. 1) and a fully extending position (as shown in FIG. 3).

As shown, the bridging part 5R preferably comprises a strap 6R connected to an outer end of the bridging part 5R, for allowing easy retraction of the bridging part. Likewise, the bridging part 5L has a strap 6L.

FIG. 3 shows the seating arrangement of FIG. 1, when both bridging parts 5R, 5L, (indicated by a dotted area for illustrative purposes) are in their fully extended position to form a bridge that spans the gap between the seats 10L, 10R.

The bridging parts 5R, 5L are mounted to the seat 10 by means of a bracket mechanism. The bracket mechanism preferably comprises at least two arms 8, and optionally also a rail.

The bracket mechanism may further comprise at least one spring (not shown). The at least one spring may be adapted for biasing the bridging part 5 toward its extended position or outer position. Alternatively, the at least one spring may be adapted for biasing the bridging part 5 toward its storage position or inner position.

Preferably, the bracket mechanism further comprises a locking mechanism or a latching mechanism (not shown) for temporarily holding the bridging parts 5L, 5R in their extended position. The seating arrangement may further comprise another locking or latching mechanism (not shown) for mutually engaging the bridging parts 5L, 5R. The seating arrangement may further comprise another locking or latching mechanism (not shown) for latching support brackets 7L, 7R of a support 7 in their supporting position as will be explained in more detail below. The one or more locking or latching mechanisms may be manual mechanisms, or spring-based mechanisms.

The outer ends of the bridging parts 5R, 5L preferably rest on a support 7, which can be implemented in different ways.

For example, each of the bridging parts 5L, 5R may further comprises a support bracket 7L, 7R hingedly connected to said bridging part 5L, 5R, for example mounted to a lower surface of the bridging part, and preferably forming an angle of about 85 ° to about 95 ° thereto when in its supporting position.

Alternatively, the vehicle itself may further comprise at least one support bracket 7 which is erectable or hingeable from a lower surface of the vehicle towards one or both outer ends of the bridging parts 5L, 5R when in their extended position.

The invention is also related to a vehicle (not shown) comprising at least one, or at least two seating arrangements 9 as described above.

It is an advantage of the seating arrangement described herein that it can be formed between each pair of adjacent seats, in the front or the rear or both the front and the rear.

The seats 10L, 10R may be fixedly or slideably mounted to the vehicle.

The invention is also related to a vehicle seat per se, the vehicle seat 10R, 10L comprising: a hollow pedestal 4L, 4R; and a bridging part 5L, 5R movably mounted to said vehicle seat, and selectively movable between a retracted (normal) position inside said hollow pedestal 4, and an extended (sleeping) position situated on a left or a right side of said vehicle seat.

In summary, the present invention discloses a seating arrangement 9 comprising two adjacent seats 10L, 10R, spaced apart from each other by a gap, each comprising a movable bridging part 5 incorporated therein. The bridging parts 5 can be used to form a bed, together with the seat cushions 2. In their stored position, the bridge parts 5 are located below the seat cushions 2. In order to transform the seats 10 into a bed, the bridging parts 5 are pulled via straps 6 connected thereto. The bridging parts 5 are mounted to the seats 10 by means of a bracket mechanism 3 preferably comprising two arms and optionally a rail, as shown in FIG. 2. When the bridging parts 5R, 5L are in their fully extended position, the bracket mechanisms 3 are preferably locked or latched to keep them in place. The bridging parts 5 may be engaged using an additional latch or lock. Preferably one or both bridging parts 5R, 5L also comprise a support bracket 7R, 7L, which may also be locked or latched in a position as shown in FIG. 3, substantially upright. In this way the adjacent seats 10L, 10R can be transformed into a bed.

In order to disassembe the bed, the optionally locked or latched support brackets 7 are unlocked or unlatched, and are easily pushed into the pedestals 4, with help of the bracket mechanism 3 comprising at least two arms 8 and optionally a rail.

### REFERENCE NUMERALS

- 1: backrest
- 2: seat cushion
- 3: bracket mechanism
- 4: pedestal
- 5: bridging part
- 6: strap
- 7: support bracket
- 8: arm
- 9: seating arrangement
- 10: seat
- d: distance between adjacent seats

## Claims

1. A seating arrangement (9) for a vehicle comprising:
- two adjacent seats (10L, 10R), spaced apart by a gap;
- a bridging mechanism which can be positioned between said seats (10L, 10R) for forming a bed;
**characterised in that**
- each of said seats (10L, 10R) comprises a hollow pedestal (4L, 4R); and
- the bridging mechanism comprises two bridging parts (5L, 5R), each bridging part (5L, 5R) being movably mounted to one of said adjacent seats (10L, 10R), and being movable between a normal, retracted position inside said hollow pedestal (4L, 4R) and an extended, sleeping position outside said hollow pedestal, between said adjacent seats (10L, 10R).

2. The seating arrangement (9) according to claim 1,
wherein the bridging parts (5L, 5R) have structural strength, and are non-inflatable.

3. The seating arrangement (9) according to any of the previous claims,
wherein the bridging parts (5R, 5L) comprise a cushion portion.

4. The seating arrangement (9) according to any of the previous claims,
further comprising a first strap (6R) connected to one of said two bridging parts (5R), and a second strap (6L) connected to the other of said bridging parts (5L).

5. The seating arrangement (9) according to any of the previous claims,
wherein each of the bridging parts (5L, 5R) is mounted to the respective seat (10L, 10R) by means of a bracket mechanism preferably comprising two arms (8) and optionally further comprising a rail.

6. The seating arrangement (9) according to claim 5,
wherein the bracket mechanism further comprises at least one spring for biasing the respective bridging part (5L, 5R) towards an inner position, or towards an outer position, or both.

7. The seating arrangement (9) according to any of the previous claims,
wherein each of the bridging parts (5L, 5R) further comprises a support bracket (7L, 7R) hingedly connected to said bridging part (5L, 5R), for supporting an outer end of said bridging part when in the extended position.

8. The seating arrangement (9) according to any of the claims 5 to 7,
wherein the bracket mechanism further comprises a locking mechanism or a latching mechanism.

9. The seating arrangement (9) according to any of the previous claims,
wherein the seats (10L, 10R) are spaced apart by a distance (d) in the range from about 50 to about 100 cm between them; and
wherein the bridging parts (5R, 5L) each have a width of about 50 % of said distance (d).

10. A vehicle comprising at least one or at least two seating arrangements (9) according to any of the previous claims.

11. The vehicle according to claim 10,
wherein the seats (10L, 10R) are fixedly or slidably mounted to the vehicle.

12. The vehicle according to claim 10 or 11,
wherein the vehicle further comprises at least one support bracket (7L, 7R) movable or erectable towards outer ends of the bridging parts (5L, 5R) when in their extended position.

13. A vehicle seat (10L, 10R) for use in the seating arrangement (9) according to any of the claims 1 to 9, the vehicle seat comprising:
- a hollow pedestal (4R, 4L);
- a bridging part (5L, 5R) movably mounted to said vehicle seat, and selectively movable between a normal, retracted position inside said hollow pedestal, and an extended, sleeping position situated on a left side or a right side of said vehicle seat.

14. The vehicle seat (7) according to claim 13,
wherein the bridging part (5L, 5R) is mounted to the vehicle seat (10L, 10R) by means of a bracket mechanism preferably comprising two arms (8) and optionally further comprising a rail.

15. A kit of parts comprising:
- a left vehicle seat (10L) according to claim 13 or 14, wherein the bridging part (5L) is extendable on a right side of the seat (10L) as seen by a person sitting on the left seat (10L); and
- a right vehicle seat (10R) according to claim 13 or 14, wherein the bridging part (5R) is extendable on a left side of the seat (10R) as seen by a person sitting on the right seat (10R).

## Patentansprüche

1. Sitzanordnung (9) für ein Fahrzeug, die Folgendes umfasst:
- zwei angrenzende Sitze (10L, 10R), durch eine Lücke voneinander beabstandet;
- einen Überbrückungsmechanismus, der zwischen den Sitzen (10L, 10R) positioniert werden kann, zum Bilden eines Betts;
**dadurch gekennzeichnet, dass**
- jeder der Sitze (10L, 10R) einen hohlen Sockel (4L, 4R) umfasst; und
- der Überbrückungsmechanismus zwei Überbrückungsteile (5L, 5R), wobei jeder Überbrückungsteil (5L, 5R) bewegbar an einem der angrenzenden Sitze (10L, 10R) montiert wird und zwischen einer normalen, eingezogenen Position im Inneren des hohlen Sockels (4L, 4R) und einer ausgefahrenen Schlafposition außerhalb des hohlen Sockels bewegbar ist, zwischen den angrenzenden Sitzen (10L, 10R) umfasst.

2. Sitzanordnung (9) nach Anspruch 1,
wobei die Überbrückungsteile (5L, 5R) eine strukturelle Festigkeit haben und nicht aufblasbar sind.

3. Sitzanordnung (9) nach einem der vorhergehenden Ansprüche,
wobei die Überbrückungsteile (5R, 5L) einen Polsterteil umfassen.

4. Sitzanordnung (9) nach einem der vorhergehenden Ansprüche,
ferner umfassend einen ersten Riemen (6R), verbunden mit einem der zwei Überbrückungsteile (5R), und einen zweiten Riemen (6L), verbunden mit dem anderen der Überbrückungsteile (5L).

5. Sitzanordnung (9) nach einem der vorhergehenden Ansprüche,
wobei jeder der Überbrückungsteile (5L, 5R) mittels eines Halterungsmechanismus am entsprechenden Sitz (10L, 10R) montiert ist, vorzugsweise zwei Arme (8) umfassend und optional ferner eine Schiene umfassend.

6. Sitzanordnung (9) nach Anspruch 5,
wobei der Halterungsmechanismus ferner zumindest eine Feder zum Vorspannen der entsprechenden Überbrückungsteile (5L, 5R) in Richtung einer inneren Position oder in Richtung einer äußeren Position oder beides umfasst.

7. Sitzanordnung (9) nach einem der vorhergehenden Ansprüche,
wobei jeder der Überbrückungsteile (5L, 5R) ferner eine Stützhalterung (7L, 7R) umfasst, die angelenkt mit dem Überbrückungsteil (5L, 5R) verbunden ist, zum Stützen eines äußeren Endes des Überbrückungsteils, wenn in der ausgefahrenen Position befindlich.

8. Sitzanordnung (9) nach einem der Ansprüche 5 bis 7,
wobei der Halterungsmechanismus ferner einen Verschließmechanismus oder einen Verriegelungsmechanismus umfasst.

9. Sitzanordnung (9) nach einem der vorhergehenden Ansprüche,
wobei die Sitze (10L, 10R) voneinander um einen Abstand (d) im Bereich von etwa 50 bis etwa 100 cm zwischen ihnen beabstandet sind; und
wobei die Überbrückungsteile (5R, 5L) jeweils eine Breite von etwa 50 % des Abstands (d) haben.

10. Fahrzeug, umfassend mindestens eine oder mindestens zwei Sitzanordnungen (9) nach einem der vorhergehenden Ansprüche.

11. Fahrzeug nach Anspruch 10,
wobei die Sitze (10L, 10R) fest oder gleitbar am Fahrzeug montiert sind.

12. Fahrzeug nach Anspruch 10 oder 11,
wobei das Fahrzeug ferner zumindest eine Stützhalterung (7L, 7R) umfasst, die in Richtung von äußeren Enden der Überbrückungsteile (5L, 5R), wenn in deren ausgefahrener Position befindlich, bewegbar oder aufrichtbar sind.

13. Fahrzeugsitz (10L, 10R) zur Verwendung in der Sitzanordnung (9) nach einem der Ansprüche 1 bis 9, wobei der Fahrzeugsitz Folgendes umfasst:
- einen hohlen Sockel (4R, 4L);
- einen Überbrückungsteil (5L, 5R), bewegbar mit dem Fahrzeugsitz verbunden und gezielt zwischen einer normalen, eingezogenen Position im Inneren des hohlen Sockels und einer ausgefahrenen Schlafposition, befindlich an einer linken Seite oder einer rechten Seite des Fahrzeugsitzes, bewegbar.

14. Fahrzeugsitz (7) nach Anspruch 13,
wobei der Überbrückungsteil (5L, 5R) mittels eines Halterungsmechanismus am Fahrzeugsitz (10L, 10R) montiert ist, vorzugsweise zwei Arme (8) umfassend und optional ferner eine Schiene umfassend.

15. Satz von Teilen, der Folgendes umfasst:
- einen linken Fahrzeugsitz (10L) nach Anspruch 13 oder 14, wobei der Überbrückungsteil (5L) an einer rechten Seite des Sitzes (10L) ausfahrbar ist, wie von einer Person gesehen, die auf dem linken Sitz (10L) sitzt; und
- einen rechten Fahrzeugsitz (10R) nach Anspruch 13 oder 14, wobei der Überbrückungsteil (5R) an einer linken Seite des Sitzes (10R) ausfahrbar ist, wie von einer Person gesehen, die auf dem rechten Sitz (10R) sitzt.

## Revendications

1. Agencement de siège (9) pour véhicule comprenant :
deux sièges adjacents (10L, 10R), espacés par un espace ;
un mécanisme formant pont qui peut être positionné entre lesdits sièges (10L, 10R) pour former un lit ;
**caractérisé en ce que**
chacun desdits sièges (10L, 10R) comprend un piédestal creux (4L, 4R) ; et
le mécanisme formant pont comprend deux parties formant pont (5L, 5R), chaque partie formant pont (5L, 5R) étant montée de manière mobile sur l'un desdits sièges (10L, 10R) adjacents, et étant mobile entre une position normale, rétractée à l'intérieur dudit piédestal creux (4L, 4R) et une position étendue, pour dormir, à l'extérieur dudit piédestal creux, entre lesdits sièges (10L, 10R) adjacents.

2. Agencement de siège (9) selon la revendication 1,
les parties formant pont (5L, 5R) ayant une résistance structurelle et n'étant pas gonflables.

3. Agencement de siège (9) selon l'une quelconque des revendications précédentes,
les parties formant pont (5R, 5L) comprenant une partie de coussin.

4. Agencement de siège (9) selon l'une quelconque des revendications précédentes,
comprenant en outre une première sangle (6R) reliée à l'une desdites deux parties formant pont (5R), et une seconde sangle (6L) reliée à l'autre desdites parties formant pont (5L).

5. Agencement de siège (9) selon l'une quelconque des revendications précédentes,
chacune des parties formant pont (5L, 5R) étant montée sur le siège (10L, 10R) respectif au moyen d'un mécanisme de support comprenant de préférence deux bras (8) et comprenant en outre éventuellement un rail.

6. Agencement de siège (9) selon la revendication 5,
le mécanisme de support comprenant en outre au moins un ressort pour solliciter la partie formant pont (5L, 5R) respective vers une position intérieure, ou vers une position extérieure, ou les deux.

7. Agencement de siège (9) selon l'une quelconque des revendications précédentes,
chacune des parties formant pont (5L, 5R) comprenant en outre une console de support (7L, 7R) reliée de manière articulée à ladite partie formant pont (5L, 5R), pour supporter une extrémité extérieure de ladite partie formant pont lorsqu'elle est en position étendue.

8. Agencement de siège (9) selon l'une quelconque des revendications 5 à 7,
le mécanisme de support comprenant en outre un mécanisme de verrouillage ou un mécanisme d'enclenchement.

9. Agencement de siège (9) selon l'une quelconque des revendications précédentes,
les sièges (10L, 10R) étant espacés d'une distance (d) comprise entre environ 50 et environ 100 cm entre eux; et
les parties formant pont (5R, 5L) ayant chacune une largeur égale à environ 50 % de ladite distance (d).

10. Véhicule comprenant au moins un ou au moins deux agencements de siège (9) selon l'une quelconque des réclamations précédentes.

11. Véhicule selon la revendication 10,
les sièges (10L, 10R) étant montés de manière fixe ou coulissante sur le véhicule.

12. Véhicule selon la revendication 10 ou 11,
le véhicule comprenant en outre au moins une console de soutien (7L, 7R) mobile ou pouvant être montée vers les extrémités extérieures des parties formant pont (5L, 5R) lorsqu'elles sont en position étendue.

13. Siège de véhicule (10L, 10R) destiné à être utilisé dans l'agencement de siège (9) selon l'une quelconque des revendications 1 à 9, le siège de véhicule comprenant :
un piédestal creux (4R, 4L) ;
une pièce formant pont (5L, 5R) montée de manière mobile sur ledit siège de véhicule, et mobile sélectivement entre une position normale, rétractée à l'intérieur dudit piédestal creux, et une position étendue, pour dormir, située sur un côté gauche ou un côté droit dudit siège de véhicule.

14. Siège de véhicule (7) selon la revendication 13,
la partie formant pont (5L, 5R) étant montée sur le siège de véhicule (10L, 10R) au moyen d'un mécanisme de support comprenant de préférence deux bras (8) et comprenant en outre éventuellement un rail.

15. Kit de pièces comprenant :
un siège de véhicule gauche (10L) selon la revendication 13 ou 14, la partie formant pont (5L) étant extensible sur un côté droit du siège (10L) tel que vu par une personne assise sur le siège gauche (10L) ; et
un siège de véhicule droit (10R) selon la revendication 13 ou 14, la partie formant pont (5R) étant extensible sur un côté gauche du siège (10R) tel que vu par une personne assise sur le siège droit (10R).
